# FASCICULE DE BREVET EUROPEEN

(11) **EP 2 558 769 B1**
(45) Date de publication et mention de la délivrance du brevet: **05.11.2014**
(21) Numéro de dépôt: 11715971.5
(22) Date de dépôt: 22.03.2011
(51) Int. Cl.: F17D 1/18, F16L 53/00

(54) **DISPOSITIF DE CHAUFFAGE POUR DISPOSITIF DE TRANSPORT D'UN FLUIDE COMPRENANT UN HYDROCARBURE**
HEIZVORRICHTUNG FÜR EINE VORRICHTUNG FÜR DEN TRANSPORT EINER KOHLENWASSERSTOFFHALTIGEN FLÜSSIGKEIT
HEATING DEVICE FOR A DEVICE FOR TRANSPORTING A FLUID CONTAINING A HYDROCARBON

(30) Priorité: 14.04.2010 FR 1052845
(43) Date de publication de la demande: 20.02.2013
(73) Titulaire: Total S.A., 92400 Courbevoie (FR)
(72) Inventeur: BIGEX, Thibaud, F-64018 Pau Cedex (FR); WOIRIN, Jérôme, F-64018 Pau Cedex (FR)
(74) Mandataire: Cabinet Plasseraud
(86) Numéro de dépôt international: PCT/FR2011/050604
(87) Numéro de publication internationale: WO 2011/128547

(56) Documents cités:
- GB-A- 2 247 507
- US-A1- 2006 102 615
- US-A1- 2008 063 478

## Description

La présente invention est relative à un dispositif de chauffage pour dispositif de transport d'un fluide comprenant un hydrocarbure.

Les dispositifs de transport d'hydrocarbure sont parfois installés dans des environnements très froids, à terre comme en mer, et parfois en mer à de très grande profondeur. Dans ces conditions le fluide peut soit se congeler, soit se coaguler, soit présenter la formation de paraffine. Ces transformations du fluide peuvent générer des bouchons et entraver le transport du fluide dans le dispositif de transport, telle qu'un pipeline, une conduite ou une vanne. C'est pourquoi ces dispositifs de transport de fluide d'hydrocarbures sont parfois chauffés pour éviter ces inconvénients.

Des couvertures chauffantes existent pour des pipeline ou conduites d'hydrocarbures. Elles sont habituellement enroulées autour de la conduite, et plusieurs sangles permettent de la maintenir contre la conduite. Le document US 2006/102615 décrit une telle couverture chauffante.

Par ailleurs, le document GB 2247507 A décrit un dispositif de chauffage selon le préambule de la revendication 1.

Cependant ces couvertures sont difficiles à mettre en oeuvre dans des environnements très froid et/ou à de grande profondeur en mer.

La présente invention a pour but d'éviter les problèmes rencontrés.

Un dispositif de chauffage pour dispositif de transport d'un fluide comprenant un hydrocarbure selon un mode de réalisation de l'invention comprend :
- une structure rigide, s'étendant entre deux flancs latéraux, formant un espace entre les flancs latéraux, et comprenant une ouverture dans une direction entre les deux flancs latéraux,
- une membrane souple s'étendant dans ledit espace depuis les flancs latéraux, pour délimiter dans l'espace une cavité interne entre ladite structure et ladite membrane et une cavité externe entre la membrane et l'ouverture, ladite membrane comprenant des moyens de chauffage, la cavité interne étant étanche, et la cavité externe étant destinée à entourer au moins partiellement le dispositif de transport,
- des moyens de pompage adaptés pour amener, retirer ou maintenir un fluide dans la cavité interne, lesdits moyens de pompage étant destinés à gonfler la cavité interne pour amener la membrane au contact du dispositif de transport de telle sorte que les moyens de chauffage chauffent le dispositif de transport, et à dégonfler la cavité interne pour mettre en place ou retirer le dispositif de chauffage autour du dispositif de transport.

Grâce à ces dispositions, le dispositif de chauffage peut être installé simplement autour du dispositif de transport d'hydrocarbure, et actionné pour que la membrane chauffante vienne en contact avec le dispositif de transport d'hydrocarbure. Cette membrane s'adapte naturellement à la forme du dispositif de transport d'hydrocarbure.

En outre, le dispositif de chauffage est amovible et peut être installé de manière automatique, à distance sans intervention humaine.

Dans divers modes de réalisation du dispositif de chauffage selon l'invention, on peut éventuellement avoir recours en outre à l'une et/ou à l'autre des dispositions suivantes :
- les moyens de pompage comprennent au moins un réservoir comprenant le fluide, une conduite reliant le réservoir à la cavité interne, une pompe adaptée pour déplacer le fluide entre le réservoir et la cavité interne et réciproquement, et une vanne pour fermer la cavité interne ;
- le dispositif de chauffage comprend outre un moyen de commande adapté pour commander la pompe, la vanne, et pour faire chauffer les moyens de chauffage de la membrane lorsque la cavité interne est gonflée ;
- les moyens de chauffage sont au moins un conducteur électrique, ledit conducteur électrique étant adapté pour chauffer la membrane par effet Joule ;
- la membrane est en élastomère et le conducteur électrique comprend des fibres de carbone noyées dans l'élastomère de la membrane ;
- le fluide est un fluide adapté pour avoir des propriétés d'isolation thermique, de telle sorte que la cavité interne isole thermiquement la membrane ;
- la membrane a une forme adaptée pour sensiblement refermer l'ouverture lorsque la cavité interne est gonflée.

D'autres caractéristiques et avantages de l'invention apparaîtront au cours de la description suivante d'un mode de réalisation, donné à titre d'exemple non limitatif, en regard des dessins joints.

Sur les dessins :

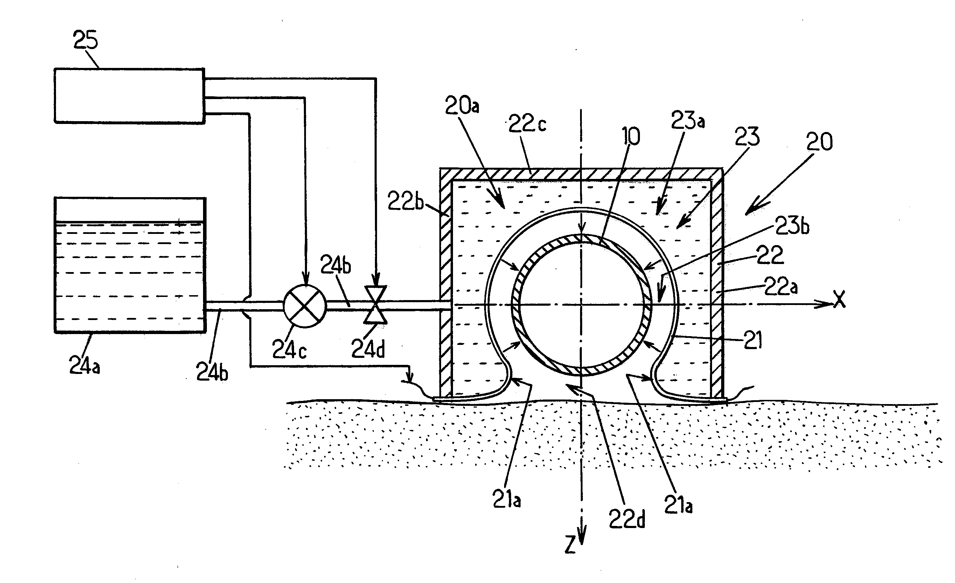

- la figure 1 est schéma représentant le dispositif de chauffage selon l'invention.

La figure 1 est une vue schématique en coupe d'un mode de réalisation d'un dispositif de chauffage 20 pour un dispositif de transport 10 d'un fluide comprenant un hydrocarbure, tel qu'un pétrole brut, un gaz, une huile lourde, ou autre. Le dispositif de transport 10 représenté est une canalisation ou pipeline ayant une forme générale cylindrique en coupe transversale. Mais, tout autre dispositif de transport d'hydrocarbure, tel des vannes, un « Christmas tree », un organe de distribution entre des canalisations, une tête de puits de forage, ou autre, est envisageable.

Le dispositif de chauffage 20 pour dispositif de transport d'un fluide 10 comprend :
- une structure rigide 22, par exemple en forme de U inversé, s'étendant entre deux flancs latéraux 22a, 22b, formant un espace 23 entre les flancs latéraux,
- une membrane souple 21 s'étendant dans ledit espace 23 depuis les flancs latéraux 22a, 22b, et délimitant l'espace 23 en une cavité interne 23a entre la structure 22 et la membrane 21, et une cavité externe 23b entre la membrane 21 et l'ouverture 22d de la structure 22, et
- des moyens de pompage 24 de la cavité interne 23a.

La structure rigide 22 comprend une jonction 22c entre les flancs latéraux 22a, 22b, et une ouverture 22d entre les deux flancs latéraux 22a, 22b dans une direction (direction Z sur la figure 1) opposée à ladite jonction 22c.

La cavité interne 23a est sensiblement fermée et étanche.

La cavité externe 23b est ouverte pour que le dispositif de chauffage 20 puisse être installé autour du dispositif de transport 10, et elle entoure au moins partiellement ledit dispositif de transport 10 lorsque le dispositif de chauffage 20 est installé.

La membrane 21 comprend des moyens de chauffage. Ces moyens de chauffage peuvent être de tout type : circulation d'un fluide chaud dans une canalisation intégrée ou solidaire de la membrane 21, ou conducteur électrique intégrée ou solidaire de la membrane 21. Ce conducteur a une résistance électrique **R** et fourni par effet Joule une puissance de chauffage ***P = Ri²*** lorsqu'un courant électrique ***i*** circule dans ce conducteur électrique.

Ce conducteur électrique peut être un câble, par exemple en cuivre.

Avantageusement, le conducteur électrique sera constitué de fibres de carbone noyées dans un élastomère de la membrane 21. Les fibres de carbone sont réparties sur quasiment toute la surface de la membrane 21. La membrane 21 est alors souple même en présence dudit conducteur électrique. De plus, le conducteur électrique est apte à produire une chaleur plus homogène et il est plus fiable qu'un unique câble en cuivre, car les fibres de carbone connectées en parallèle conduisent toutes une partie du courant électrique.

La membrane souple 21 peut être en élastomère, et par exemple en une silicone.

Les moyens de pompage 24 sont adaptés pour amener, retirer ou maintenir un fluide dans la cavité interne 23a. Ils permettent de gonfler la cavité interne 23a pour amener la membrane 21 au contact du dispositif de transport 10 de telle sorte que les moyens de chauffage chauffent le dispositif de transport 10. Ils permettent de dégonfler la cavité interne 23a pour mettre en place ou retirer le dispositif de chauffage 20 autour du dispositif de transport 10.

Le fluide peut être un fluide ayant des propriétés d'isolation thermique, tel qu'un gel visqueux. Grâce à cette disposition, lorsque la cavité interne 23a est gonflée et que les moyens de chauffage chauffent la membrane 21, celle-ci est de plus isolée thermiquement de l'environnement extérieur du dispositif de chauffage 20 et la chaleur produite est concentrée vers le dispositif de transport 10. Le dispositif de chauffage 20 est ainsi plus efficace.

De plus, la membrane 21 peut avoir toute forme dans l'espace 23. Notamment elle peut avoir une forme en U inversé ou en Ω ou ayant au moins une portion 21a formant un pli s'avançant dan l'espace 23 et formant un rétrécissement de l'ouverture 22d. Grâce à cette disposition, lorsque la cavité interne 23a est gonflée la membrane 21 peut venir en contact avec une plus grande surface du dispositif de transport 10, et éventuellement refermer l'ouverture 22d pour encore mieux chauffer le dispositif de transport 10 et l'isoler en réduisant les pertes thermiques.

Les moyens de pompage 24 comprennent :
- un réservoir 24a comprenant une quantité de réserve du fluide,
- une conduite 24b reliant le réservoir 24a à la cavité interne 23a du dispositif de chauffage 20,
- une pompe 24c adaptée pour déplacer le fluide entre le réservoir et la cavité interne et réciproquement, et
- une vanne 24d pour fermer ou ouvrir la conduite 24b.

Un moyen de commande 25 est adapté pour commander la pompe 24c, la vanne 24d, et pour faire chauffer les moyens de chauffage de la membrane 21 lorsque la cavité interne 23a est gonflée.

Pour faire fonctionner le dispositif de chauffage 20 :
- la vanne 24d est ouverte,
- la pompe 24c est actionnée pour déplacer une quantité prédéterminée de fluide du réservoir 24a vers la cavité interne 23a, de telle sorte que la cavité interne 23a gonfle et la membrane 21 souple se déploie pour venir en contact avec le dispositif de transport 10,
- la vanne 24d est alors fermée pour maintenir le volume de fluide dans la cavité interne 23a et maintenir le contact entre la membrane 21 et le dispositif de transport 10, et
- les moyens de chauffage sont actionnés pour faire chauffer la membrane 21 et par conduction thermique le dispositif de transport 10.

Lorsque le dispositif de transport 10 a été suffisamment réchauffé pour que le bouchon gelé d'hydrocarbure ait disparu :
- la vanne 24d est ré-ouverte,
- la pompe 24c est actionnée pour inversement déplacer une quantité prédéterminée de fluide de la cavité interne 23a vers le réservoir 24a, de telle sorte que la cavité interne 23a se dégonfle et la membrane 21 souple revient vers une position distante du dispositif de transport 10, et
- le dispositif de chauffage 20 peut être retiré.

Les moyens de commande 25 peuvent être placés à distance du dispositif de chauffage 20. Ce dispositif de chauffage 20 peut donc être installé et retiré facilement, de manière automatique et sans intervention humaine à proximité du dispositif de transport 10. De plus, la membrane 21 souple du dispositif de chauffage 20 peut envelopper au mieux le dispositif de transport 10 pour le réchauffer.

## Revendications

1. Dispositif de chauffage pour dispositif de transport (10) d'un fluide comprenant un hydrocarbure, comprenant :
- une structure rigide (22), s'étendant entre deux flancs latéraux (22a, 22b), formant un espace (23) entre les flancs latéraux (22a, 22b), et comprenant une ouverture (22d) dans une direction (Z) entre les deux flancs latéraux,
- une membrane (21) souple, s'étendant dans ledit espace (23) depuis les flancs latéraux (22a, 22b), pour délimiter dans l'espace (23) une cavité interne (23a) entre la structure (22) et la membrane (21) et une cavité externe (23b) entre la membrane (21) et l'ouverture (22d), la cavité interne (23a) étant étanche, et la cavité externe (23b) étant destinée à entourer au moins partiellement le dispositif de transport (10), **caractérisé en ce qu'**il comprend
- des moyens de pompage (24) adaptés pour amener, retirer ou maintenir un fluide dans la cavité interne (23a), lesdits moyens de pompage (24) étant destinés à gonfler la cavité interne (23a) pour amener la membrane (21) au contact du dispositif de transport (10) de telle sorte que des moyens de chauffage chauffent le dispositif de transport, et à dégonfler la cavité interne (23a) pour mettre en place ou retirer le dispositif de chauffage autour du dispositif de transport (10), et **en ce que** ladite membrane (21) comprend les moyens de chauffage.

2. Dispositif selon la revendication 1, dans lequel les moyens de pompage (24) comprennent au moins un réservoir (24a) comprenant le fluide, une conduite (24b) reliant le réservoir (24a) à la cavité interne (23a), une pompe (24c) adaptée pour déplacer le fluide entre le réservoir et la cavité interne et réciproquement, et une vanne (24d) pour fermer la cavité interne (23a).

3. Dispositif selon la revendication 2, comprenant en outre un moyen de commande (25) adapté pour commander la pompe (24c), la vanne (24d), et pour faire chauffer les moyens de chauffage de la membrane (21) lorsque la cavité interne (23a) est gonflée.

4. Dispositif de chauffage selon l'une des revendications précédentes, dans lequel les moyens de chauffage sont au moins un conducteur électrique, ledit conducteur électrique étant adapté pour chauffer la membrane (21) par effet Joule.

5. Dispositif selon la revendication 4, dans lequel la membrane (21) est en élastomère et le conducteur électrique comprend des fibres de carbone noyées dans l'élastomère de la membrane.

6. Dispositif selon l'une des revendications précédentes, dans lequel le fluide est un fluide adapté pour avoir des propriétés d'isolation thermique, de telle sorte que la cavité interne (23a) isole thermiquement la membrane (21).

7. Dispositif selon l'une des revendications précédentes, dans lequel la membrane (21) a une forme adaptée pour sensiblement refermer l'ouverture (22d) lorsque la cavité interne (23a) est gonflée.

## Patentansprüche

1. Heizvorrichtung für Transportvorrichtung (10) für eine Flüssigkeit umfassend einen Kohlenwasserstoff, umfassend:
- eine steife Struktur (22), die sich zwischen zwei seitlichen Flanken (22a, 22b) erstreckt, einen Raum (23) zwischen den seitlichen Flanken (22a, 22b) bildet und eine Öffnung (22d) in eine Richtung (Z) zwischen den beiden seitlichen Flanken umfasst,
- eine flexible Membran (21), die sich von den seitlichen Flanken (22a, 22b) aus im Raum (23) erstreckt, um im Raum (23) einen inneren Hohlraum (23a) zwischen der Struktur (22) und der Membran (21) und einen äußeren Hohlraum (23b) zwischen der Membran (21) und der Öffnung (22d) zu begrenzen, wobei der innere Hohlraum (23a) dicht ist und der äußere Hohlraum (23b) dazu bestimmt ist, die Transportvorrichtung (10) zumindest teilweise zu umgeben, **dadurch gekennzeichnet, dass** sie
- Pumpmittel (24), die angepasst sind, um eine Flüssigkeit in den inneren Hohlraum (23a) zu befördern, aus diesem zu entfernen oder in diesem zu halten, wobei die Pumpmittel (24) dazu bestimmt sind, den inneren Hohlraum (23a) zu füllen, um die Membran (21) mit der Transportvorrichtung (10) in Kontakt zu bringen, so dass die Heizmittel die Transportvorrichtung heizen, und den inneren Hohlraum (23a) abzulassen, um die Heizvorrichtung um die Transportvorrichtung (10) zu installieren oder zu entfernen,
und dadurch, dass die Membran (21) die Heizmittel umfasst.

2. Vorrichtung nach Anspruch 1, wobei die Pumpmittel (24) zumindest einen die Flüssigkeit umfassenden Tank (24a), eine den Tank (24a) mit dem inneren Hohlraum (23a) verbindende Leitung (24b), eine Pumpe (24c), die angepasst ist, um die Flüssigkeit zwischen dem Tank und dem inneren Hohlraum und umgekehrt zu bewegen, und ein Ventil (24d) zum Verschließen des inneren Hohlraums (23a) umfassen.

3. Vorrichtung nach Anspruch 2, ferner umfassend ein Steuerungsmittel (25), das angepasst ist, um die Pumpe (24c) und das Ventil (24d) zu steuern und um die Heizmittel der Membran (21) zu erhitzen, wenn der innere Hohlraum (23a) gefüllt ist.

4. Heizvorrichtung nach einem der vorhergehenden Ansprüche, wobei die Heizmittel zumindest ein elektrischer Leiter sind, wobei der elektrische Leiter angepasst ist, um die Membran (21) durch Joule-Effekt zu erhitzen.

5. Vorrichtung nach Anspruch 4, wobei die Membran (21) aus einem Elastomer besteht und der elektrische Leiter im Elastomer der Membran eingebettete Kohlenstofffasern umfasst.

6. Vorrichtung nach einem der vorhergehenden Ansprüche, wobei die Flüssigkeit eine Flüssigkeit ist, die angepasst ist, um Wärmedämmeigenschaften aufzuweisen, so dass der innere Hohlraum (23a) die Membran (21) wärmedämmt.

7. Vorrichtung nach einem der vorhergehenden Ansprüche, wobei die Membran (21) eine Form aufweist, die angepasst ist, um die Öffnung (22d) im Wesentlichen zu verschließen, wenn der innere Hohlraum (23a) gefüllt ist.

## Claims

1. Heating device for a device (10) for transporting a fluid containing a hydrocarbon, comprising:
- a rigid structure (22) extending between two side walls (22a, 22b), forming a space (23) between the side walls (22a, 22b), and comprising an opening (22d) in one direction (Z) between the two side walls,
- a flexible membrane (21) extending into said space (23) from the side walls (22a, 22b), to delimit an inner cavity (23a) in the space (23) between the structure (22) and the membrane (21) and an outer cavity (23b) between the membrane (21) and the opening (22d), the inner cavity (23a) being fluid-tight, and the outer cavity (23b) being designed to at least partially surround the transportation device (10),
**characterized in that** it comprises pumping means (24) adapted to bring, remove, or maintain a fluid in the inner cavity (23a), said pumping means (24) being designed to inflate the inner cavity (23a) to bring the membrane (21) into contact with the transportation device (10) such that the heating means heat the transportation device, and to deflate the inner cavity (23a) in order to place or remove the heating device around the transportation device (10), and **in that** said membrane (21) comprising the heating means.

2. Device according to Claim 1, wherein the pumping means (24) comprise at least one reservoir (24a) containing the fluid, one line (24b) connecting the reservoir (24a) to the inner cavity (23a), one pump (24c) suitable for moving fluid between the reservoir and the inner cavity and vice versa, and one valve (24d) to close off the inner cavity (23a).

3. Device according to Claim 2, further comprising a control means (25) suitable for controlling the pump (24c) and the valve (24d), and for causing the heating means for the membrane (21) to heat when the inner cavity (23a) is inflated.

4. Heating device according to any of the preceding claims, wherein the heating means are at least one electrical conductor, said electrical conductor being suitable for heating the membrane (21) by Joule effect.

5. Device according to Claim 4, wherein the membrane (21) is made of elastomer and the electrical conductor comprises carbon fibers embedded in the elastomer of the membrane.

6. Device according to any of the preceding claims, wherein the fluid is a fluid having heat insulation properties, so that the inner cavity (23a) thermally insulates the membrane (21).

7. Device according to any of the preceding claims, wherein the membrane (21) has a shape suitable for substantially closing the opening (22d) when the inner cavity (23a) is inflated.
